# EUROPÄISCHE PATENTSCHRIFT

(11) **EP 4 156 859 B1**
(45) Veröffentlichungstag und Bekanntmachung des Hinweises auf die Patenterteilung: **04.11.2026**
(21) Anmeldenummer: 22197954.5
(22) Anmeldetag: 27.09.2022
(51) Int. Cl.: H05B 6/10, H05B 6/06, H05B 3/06, H05B 1/02, H05B 3/40, B23B 31/117, B23P 11/02, H05B 6/14

(54) **SCHRUMPFGERÄT UND BETRIEBSVERFAHREN DAFÜR**
SHRINKING APPARATUS AND METHOD FOR OPERATING SAME
APPAREIL DE RÉTRACTION ET SON PROCÉDÉ DE FONCTIONNEMENT

(30) Priorität: 27.09.2021 DE 102021124970
(43) Veröffentlichungstag der Anmeldung: 29.03.2023
(73) Patentinhaber: Helmut Diebold GmbH & Co. Goldring-Werkzeugfabrik, 72417 Jungingen (DE)
(72) Erfinder: DIEBOLD, Hermann, 72379 Hechingen (DE)
(74) Vertreter: Pfiz, Thomas

(56) Entgegenhaltungen:
- EP-A1- 3 557 945
- DE-A1- 10 231 318
- DE-A1- 102007 010 226
- DE-B3- 102004 042 898
- DE-B4- 10 025 007
- DE-B4- 102004 042 892
- US-A1- 2020 061 760

## Beschreibung

Die Erfindung betrifft ein Betriebsverfahren für ein Schrumpfgerät zum Ein- oder Ausschrumpfen eines in einem Schrumpffutter fixierbaren Werkzeugs, wobei das Schrumpffutter in einer vorzugsweise induktiven Heizeinheit positioniert wird und in einem Heizvorgang aufgeheizt wird, wobei bei dem Heizvorgang ein Heizzyklus durch einmalige Betätigung nur eines Betätigungselements einer Gerätebedienschnittstelle aktiviert wird, wobei eine vorgegebene Zieltemperatur durch die Heizeinheit angesteuert wird. Die Erfindung betrifft weiter ein entsprechend geeignetes Schrumpfgerät.

Am Markt erhältliche Schrumpfgeräte sind in der Regel mit Tastenfeldern, insbesondere einfachen Mehrtasten-Foliendisplays für die Bedienung ausgestattet. Der Benutzer muss bei der Navigation durch ein Menü verschiedene Betriebsmodi und Parametersätze, insbesondere Heizzeit und Heizleistung in Bezug auf das eingesetzte Futter auswählen. Wenn der Schrumpfvorgang allerdings nicht erfolgreich war, muss der Benutzer Entscheidungen treffen, ob der Vorgang wiederholt wird, und ob die Parameter geändert werden sollten. Hier ist zu bemerken, dass die Mehrzahl der durch Überhitzung auftretenden Schädigungsfälle auf Benutzerfehler zurückzuführen sind.

In der DE 10 2007 010226 A1 wird vorgeschlagen, dass die Steuerung nach Ablauf einer vorgegebenen Zeit abschaltet bzw. die Temperatur am Werkzeughalter gemessen und mit einer vorgegebenen Abschalttemperatur verglichen wird. Über die Bestimmung der Abschalttemperatur wird allerdings nichts offenbart.

Die DE 100 25 007 B4 befasst sich mit einer Umschaltung auf eine höhere Ausgangsspannung, um einen Induktorwechsel entbehrlich zu machen. Dabei sind über entsprechende Tasten eines Bedienfeldes der Werkstofftyp des einzuspannenden Werkzeugs sowie der zugehörige Werkzeugdurchmesser einzugeben. Das Beenden des Heizbetriebs erfolgt erst, wenn das Werkzeug in die erweiterte Werkzeugaufnahmeöffnung einführbar ist.

US 2020/061760 A1 möchte den magnetischen Flusskonzentrator optimal bezüglich des Werkzeughalters anordnen. Dafür werden diverse Sensoren und Kameras benötigt. Der Induktionsstrom fließt nur während der Aktivierungsdauer eines Tasters.

Die Dokumente EP 3 557 945 A1, DE 10 2004 042898 B3, DE 10 2004 042892 B4 und DE 102 31 318 A1 offenbaren eine direkte oder indirekte Temperatursteuerung des Heizbetriebs, aber keine einmalige Betätigung.

Ausgehend hiervon liegt der Erfindung die Aufgabe zugrunde, die im Stand der Technik bekannten Verfahren und Vorrichtungen weiter zu verbessern und zu erreichen, dass Bediener ohne besondere Schulung mit dem Schrumpfgerät arbeiten können und keine lange Einlernphase absolvieren müssen, dass Bedienungsfehler und Beschädigungen möglichst vermieden werden und dass auch ein energiesparender Betrieb möglich ist.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht in einer ersten Variante davon aus, dass der ganze Schrumpf-Prozess mit nur einem Tastendruck gestartet wird, nachdem der zu erwärmende Werkzeughalter ordnungsgemäß in der Schrumpfposition positioniert wurde. Demzufolge wird erfindungsgemäß vorgeschlagen, dass . Das Gerät erwärmt daraufhin das Schrumpffutter bzw. den Werkzeughalter auf einen vorgegebenen Sollwert als Zieltemperatur, der geräteseitig erfasst wird. Der Nutzer kann dann den geplanten Werkzeugwechsel durchführen. Auf diese Weise lässt sich ein prozesssicherer, energiesparender und materialschonender Erwärmungsprozess durchführen, ohne dass fehlerhafte Benutzereingriffe den Prozesserfolg gefährden. Eine Überhitzung durch einen Bedienfehler ist somit weitgehend ausgeschlossen. Durch die Ansteuerung einer Zieltemperatur ist zudem keinerlei weitere Parametereingabe über Zeit und/oder Leistung der Heizung durch den Benutzer erforderlich. Da nur ein Bedienelement bzw. eine einzige Taste zu betätigen ist, werden Bedienfehler stark reduziert. Insbesondere können keine falschen Modi ausgewählt bzw. Einstellungen falsch gesetzt werden.

Eine weitere Verbesserung sieht vor, dass Zieltemperatur nach Maßgabe einer einer Erhitzungsdauer bis zum Erreichen einer Temperaturschwelle von 290°C automatisch bestimmt wird. Dadurch lässt sich die benötigte Zeit und Energie beim Erhitzungs- und ggf. Abkühlvorgang reduzieren.

Vorteilhafterweise wird das Betätigungselement auf einem Berührbildschirm der Geräteschnittstelle dargestellt wird. Denkbar ist es auch, dass das Betätigungselement als mechanischer Fuß- oder Handtaster bereitgestellt wird.

Um trotz unterschiedlicher Prozessbedingungen einen Verfahrenserfolg zu gewährleisten, ist es vorteilhaft, wenn das Erreichen der Zieltemperatur mittels eines Sensors vorzugsweise berührungslos an dem Schrumpffutter erfasst wird. Hierfür wird bevorzugt ein direkt auf den Mantel des Schrumpffutters ausgerichtetes Pyrometer eingesetzt.

Um unnötige Energieverluste und Werkzeugschädigungen in einem ersten Schritt zu vermeiden, ist es günstig, wenn eine Zieltemperatur im Bereich von 290 bis 390°C, bevorzugt im Bereich von 320 bis 380°C vorgegeben vorgegeben oder automatisch gewählt wird.

Gemäß einer weiteren Variante oder einem weiteren Aspekt der Erfindung wird vorgeschlagen, dass nach Aktivierung eines Heizzyklus eine vorgegebene Zieltemperatur durch die Heizeinheit angesteuert wird, und dass bei Erreichen der Zieltemperatur eine Bedienerbestätigung für einen Nachheizzyklus mit höherer Zieltemperatur abgefragt wird. Durch diese Vorgehensweise kann Zeit und Energie gespart werden, da zunächst der aus der Praxis erfolgreiche Temperaturwert angesteuert wird. Erst wenn der erste Heizzyklus nicht erfolgreich war, wird ggf. mehr Zeit/Energie benötigt. Die Ersparnis geht doppelt in den gesamten Prozess ein, da das anschließende Abkühlen nicht von einem unnötig hohen Temperaturniveau aus erfolgt. Bei bestimmten Materialen (insbesondere Edelstahl) ist es erforderlich, dass sich die Wärme in dem Werkzeughalter verteilt. Hierbei kann das Werkzeug leichter eingesetzt werden, wenn der Halter schrittweise kurz erhitzt wird, anstelle eines einmaligen Vorgangs.

Eine vorteilhafte Ausgestaltung sieht vor, dass die Bedienerbestätigung durch eine Ja/Nein-Auswahl an der Gerätebedienschnittstelle abgefragt wird, wobei bei einer Ja-Auswahl der Nachheizzyklus gestartet wird und bei einer Nein-Auswahl der Heizvorgang beendet wird. Somit kann auch dieser Verfahrensschritt durch einen einfachen Tastendruck gesteuert werden.

Für einfache Verfahrensweise ohne zusätzliche Benutzereingaben ist es vorteilhaft, wenn in dem Nachheizzyklus die Zieltemperatur um einen vorgegebenen Betrag erhöht wird.

Um ein Energie-sparendes iteratives Vorgehen zu ermöglichen, ist es von Vorteil, wenn mehrere Nachheizzyklen nach jeweiliger Bedienerbestätigung nacheinander durchlaufen werden.

Für eine weitere Verbesserung des Verfahrenserfolges ist es vorteilhaft, wenn in einem zweiten oder weiteren Nachheizzyklus mindestens ein Heizparameter ausgewählt aus der Gruppe Aufheizgradient, Zieltemperatur, Haltedauer der Zieltemperatur verändert wird.

Für einen automatischen Verfahrensablauf ist es auch günstig, wenn nach einer vorgegebenen Wartezeit nach Erreichen der Zieltemperatur der Heizvorgang selbsttätig beendet wird.

Um Dauer für den Werkzeugwechsel zu verkürzen, ist es günstig, wenn das Schrumpffutter nach Beendigung des Heizvorgangs aktiv mittels eines Kühlmediums abgekühlt wird.

Eine weitere Verbesserung sieht vor, dass die Abkühldauer des Schrumpffutters abhängig von der Dauer des Heizvorgangs, der erreichten Zieltemperatur und/oder der eingebrachten Heizleistung angepasst wird. Die Dauer des Heizvorgangs ist abhängig von der zu erwärmenden Masse.

Um Überhitzungsschäden möglichst zu vermeiden, ist es vorteilhaft, wenn der Heizvorgang bei Erreichen einer vorgegebenen Grenztemperatur des Schrumpffutters abgebrochen wird.

Eine weitere Verbesserung lässt sich dadurch erreichen, dass die Grenztemperatur im Bereich von 400 bis 600°C vorzugsweise abhängig von einer bei der Härtung des Schrumpffutters im Zuge von dessen Herstellung gewählten Anlasstemperatur vorgegeben wird.

Vorteilhafterweise wird das Schrumpffutter durch eine Temperaturregelung auf der Zieltemperatur gehalten.

Eine weitere Verbesserung des Bedienkomforts lässt sich dadurch erreichen, dass die aktuelle Temperatur des Schrumpffutters auf einer Anzeige der Gerätebedienschnittstelle angezeigt wird.

In Bezug auf ein Schrumpfgerät wird zur Lösung der eingangs genannten Aufgabe vorgeschlagen, dass die Zieltemperatur durch ein Steuergerät nach Maßgabe einer Werkzeugaufnahmekontur des Schrumpffutters, einer benötigten Heizleistung in einer Anfangsphase des Heizzyklus und/oder einer Erhitzungsdauer bis zum Erreichen einer Temperaturschwelle automatisch bestimmt wird . Damit lassen sich die oben genannten Vorteile in entsprechender Weise erzielen.

Im Folgenden wird die Erfindung anhand des in der Zeichnung in schematischer Weise dargestellten Ausführungsbeispiels näher erläutert. Es zeigen:
- Fig. 1: ein Schrumpfgerät mit einer Gerätebedienschnittstelle zur One-Touch-Aktivierung in Seitenansicht;
- Fig. 2: ein Ablaufdiagramm des Schrumpfbetriebs;
- Fig. 3: einen Heizverlauf in einem Temperatur-Zeit-Diagramm;
- Fig. 4 bis 7: Anzeigen und Betätigungsmöglichkeiten einer Gerätebedienschnittstelle in verschiedenen Prozessstufen des Schrumpfbetriebs.

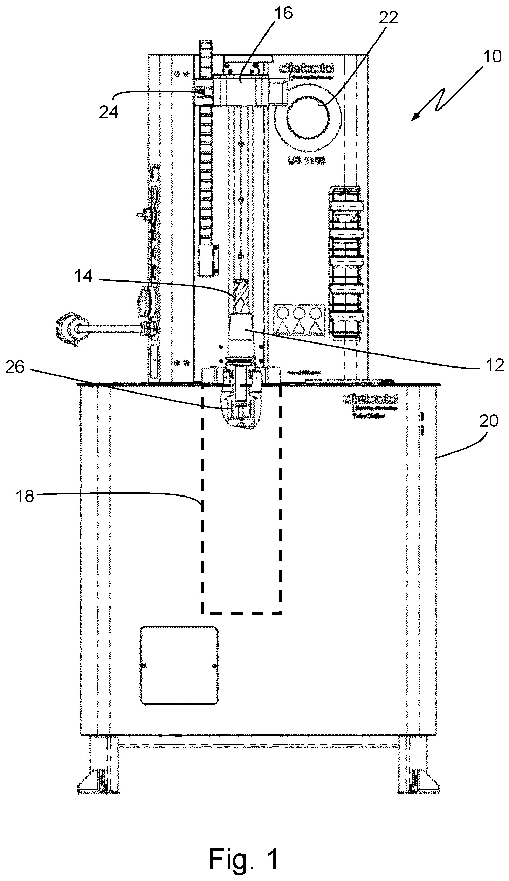

Das in Fig. 1 dargestellte Schrumpfgerät 10 dient zur Temperierung eines Schumpffutters 12 beim Ein- bzw. Ausschrumpfen eines Schaftwerkzeugs 14, insbesondere eines Fräsers oder Bohrers. Zu diesem Zweck sind eine induktiv arbeitende Heizeinheit 16 und eine als Flüssigkeitskühler ausgebildete Kühleinheit 18 an einem Gerätegestell 20 modulartig miteinander kombiniert. Zur Interaktion mit dem Benutzer ist eine Gerätebedienschnittstelle 22 vorgesehen, die über ein Bus-System, beispielsweise einen CAN-Bus mit einem nicht gezeigten elektronischen Steuergerät zusammenwirkt. Daran angeschlossen ist auch ein als Pyrometer ausgestalteter Temperaurfühler 24, der die Oberflächentemperatur des Schrumpffutters 12 direkt erfassen kann.

Zum Erwärmen des Schrumpffutters 12 kann die Heizeinheit 16 aus der in Fig. 1 gezeigten Ausgangsstellung in eine das Schrumpffutter umgreifende Heizstellung abgesenkt werden. Durch die thermische Ausdehnung beim induktiven Heizen des Schrumpffutters 12 ist es sodann möglich, das Werkzeug 14 einzusetzen oder zu entnehmen. Zum beschleunigten Abkühlen lässt sich die Kühleinheit 18 aus der in Fig. 1 gezeigten Freigabestellung nach oben verfahren und mit Flüssigkeit befüllen.

In anderen Ausführungsbeispielen sind auch horizontal bewegliche Heizeinheiten einsetzbar, während die Abkühlung an separaten Abkühlstationen erfolgt. Im einfachsten Fall kann auch auf eine aktive Kühlung verzichtet werden.

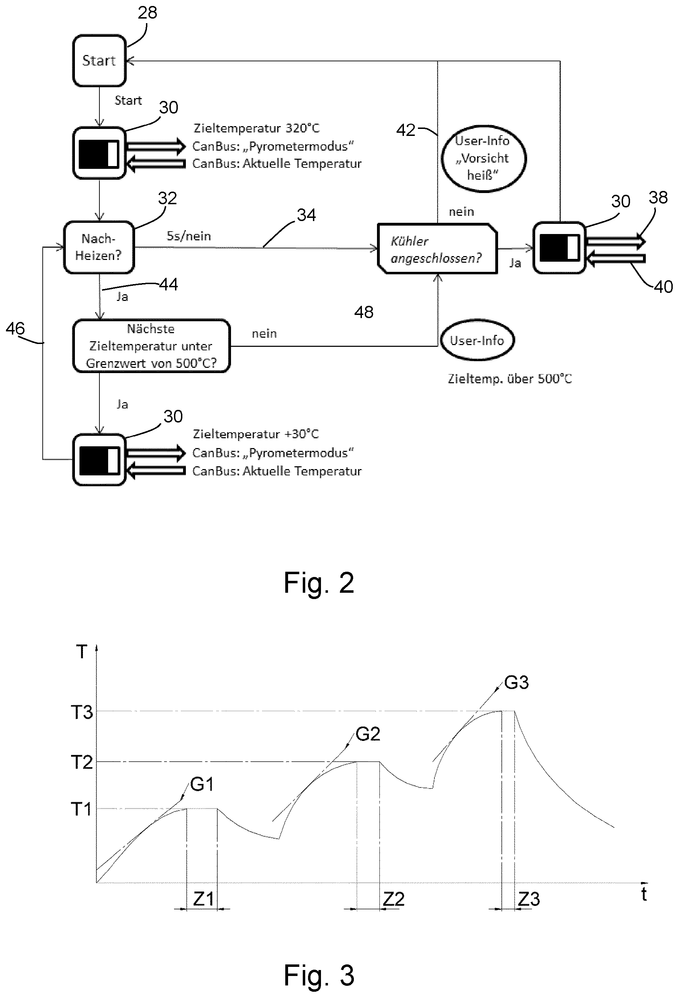

Fig. 2 illustriert den Prozessablauf, der mittels einfachster Benutzereingaben an der Gerätebedienschnittstelle 22 weitgehend automatisch und prozesssicher erfolgen kann.

Zunächst wird das Schrumpffutter 12 in einer gerätefesten Aufnahme 26 positioniert. Der Bediener bzw. Benutzer gibt dann einen einmaligen Startbefehl 28, woraufhin ein Heizzyklus auf eine vorgegebene Zieltemperatur von bspw. 320°C mittels der Heizeinheit 16 angesteuert wird. Die aktuelle Temperatur wird mittels des Pyrometers 24 an dem Mantel des Schrumpffutters 12 erfasst und auf einer Anzeige 30 grafisch dargestellt.

Die Zieltemperatur kann durch das Steuergerät automatisch gewählt werden, beispielsweise nach Maßgabe einer Werkzeugaufnahmekontur des Schrumpffutters 12 und/oder einer benötigten Heizleistung in einer Anfangsphase des Heizzyklus und/oder einer Erhitzungsdauer bis zum Erreichen einer Temperaturschwelle bspw. von 290°C. In diesem Zusammenhang kann bspw. berücksichtigt werden, dass kleine, dünnwandige Werkzeugaufnahmen weniger Heizleistung benötigen bzw. sich schneller auf eine bestimmte Temperaturschwelle erhitzen lassen.

Bei Erreichen der Zieltemperatur wird eine Bedienerbestätigung 32 für eventuellen Nachheizzyklus mit höherer Zieltemperatur abgefragt. Ein solcher Nachheizzyklus kann dann erforderlich sein, wenn der Werkzeugwechsel nicht erfolgreich durchgeführt werden konnte, etwa weil die thermische Aufweitung des Schrumpffutters 12 zu gering war und das Werkzeug 14 sich noch nicht lösen lässt. Die Bedienerbestätigung 32 wird durch eine Ja/Nein-Auswahl an der Gerätebedienschnittstelle 22 abgefragt, wobei bei einer Ja-Auswahl der Nachheizzyklus gestartet wird und bei einer Nein-Auswahl kein Nachheizzyklus erfolgt und der Heizvorgang beendet wird. Für die Eingabe der Auswahl kann auch ein Zeitfenster bzw. eine Wartezeit von bspw. 5s vorgesehen sein, wobei bei Verstreichen der Wartezeit automatisch die "Nein"-Auswahl erfolgt. Das gewählte Zeitfenster wird maximal für die Handhabung beim Werkzeugwechsel benötigt. Der Benutzer wird geräteseitig intelligent unterstützt und von unerwünschten Manipulationen durch Eingabe von anderen Setup-Werten abgehalten.

Bei Erreichen der Zieltemperatur kann die Stromzufuhr zu der Heizeinheit 16 einfach abgeschaltet werden. Alternativ ist es auch denkbar, dass das Schrumpffutter 12 durch eine Temperaturregelung auf der Zieltemperatur gehalten wird.

Wird der Heizvorgang über den Zweig 34 abgebrochen, erfolgt steuerungsseitig eine Prüfung, ob eine Kühleinheit 18 angeschlossen bzw. betriebsbereit ist. Für den "Ja"-Fall 36 wird unter Anzeige der erreichten Temperatur aktiv gekühlt. Hierzu wird über den Can-Bus ein Startbefehl 38 für den Kühlvorgang ausgegeben und das Ende 40 des Kühlvorgangs quittiert.

Bei nicht angeschlossenem Kühler ("Nein"-Fall 42) wird der Nutzer lediglich gewarnt, dass das Werkzeug 12 heiß ist und daher noch nicht berührt werden sollte.

Bei einer Ja-Auswahl 44 für den Nachheizzyklus wird die für den ersten Heizzyklus vorgegebene Zieltemperatur um ein bestimmtes Temperaturintervall von bspw. 30°C erhöht. Hierbei wird steuerungsseitig überprüft, ob die nächste Zieltemperatur unter einem vorbestimmten Grenzwert von bspw. 500°C liegt. Der Grenzwert kann abhängig von einer bei der Härtung des Schrumpffutters 12 gewählten Anlasstemperatur vorgegeben werden, so dass eine Gefügeumwandlung bzw. eine thermische Werkzeugschädigung vermieden wird.

Auch bei Erreichen der neuen Zieltemperatur kann die Aufheizung noch nicht hinreichend für den Werkzeugwechsel sein, so dass eine Rückführung 46 für den Start eines weiteren Nachheizzyklus vorgesehen ist. Diese Prozedur lässt sich fortsetzen, bis die Grenztemperatur erreicht oder überschritten wird. In diesem Fall wird dann über den Zweig 48 der Gesamte Heizvorgang (umfassend den ersten Heizzyklus und den oder die Nachheizzyklen) abgebrochen und der Benutzer entsprechend informiert. Dabei kann die Abkühldauer des Schrumpffutters 12 abhängig von der Dauer des Heizvorgangs und der erreichten Zieltemperatur angepasst werden.

Fig. 3 zeigt einen Temperaturverlauf eines Heizvorgangs, bei dem die Parameter Zieltemperatur T, AufheizGradient G und Temperatur-Haltedauer Z zweckmäßig angepasst werden. So erfolgt der erste Heizzyklus mit einem Gradient G1 und einer Haltedauer Z1 bei der Temperatur T1, während der darauffolgende Nachheizzyklus mit G2, Z2, T2 und der weitere Nachheizzyklus mit G3, Z3, T3 gefahren werden. Beim Ausschrumpfvorgang ist es hilfreich, wenn das Schrumpffutter 12 bzw. der Werkzeughalter möglichst hoch und schnell erhitzt wird, so dass sich das Werkzeug 14 nicht miterhitzt und sich dadurch gleichermaßen thermisch ausdehnt. Im ersten Anlauf wird daher nicht direkt die höchstmöglichen Werte für Temperatur und Gradient gewählt, weil die Mehrzahl der Schrumpfvorgänge bereits mit T1/G1 funktionieren und dadurch im Vergleich zu T2/G2 Zeit und Energie gespart wird. Zudem wird die Gefahr von "Überschwingern" im Regelkreis vermieden, bei denen das eigentliche Ziel übertroffen wird, weil die Messsysteme bzw. der Regelkreis zu träge sind. Beim Nachheizen werden dann die Zieltemperatur und der Gradient sukzessive erhöht und die Haltezeit verkürzt.

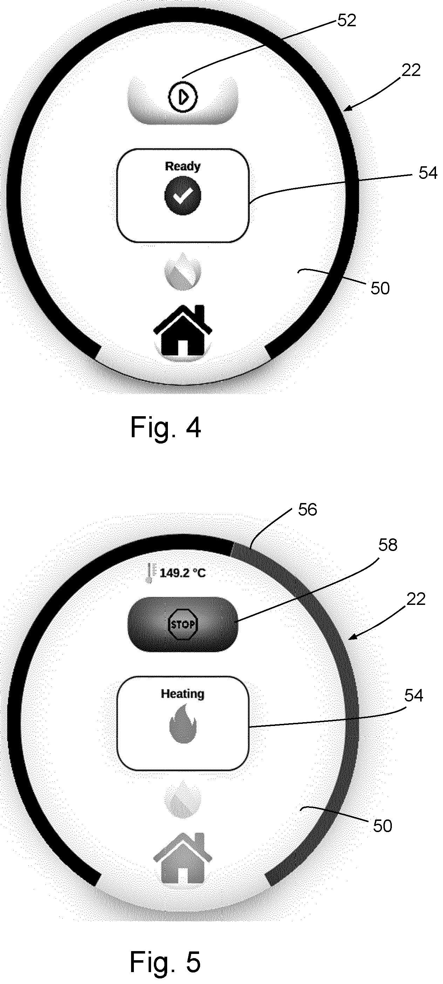

Fig. 4 bis 7 zeigen verschiedene Anzeigen und Betätigungsmöglichkeiten der für einen One-Touch-Start eingerichteten Gerätebedienschnittstelle 22, die einen Berührbildschirm (Touchscreen 50) umfasst. Im Ausgangszustand (Start 28 der Fig. 2) ist es möglich, dass der Heizvorgang durch einmalige Betätigung nur eines Betätigungselements, nämlich der Touch-Taste 52 gestartet wird.

Wie in Fig. 5 illustriert, wechselt sodann die Anzeige 54 von "Ready" (Bereitschaft) auf "Heating" (Heizen), und der Benutzer wird durch zunehmenden Farbwechsel der Ringanzeige 56 grafisch über die erreichte Heiztemperatur bis zum Ringende (Zieltemperatur) unterrichtet. Hier besteht jederzeit die Möglichkeit, durch die Taste 58 den Heizvorgang abzubrechen. Ansonsten wird die Zieltemperatur selbsttätig angesteuert.

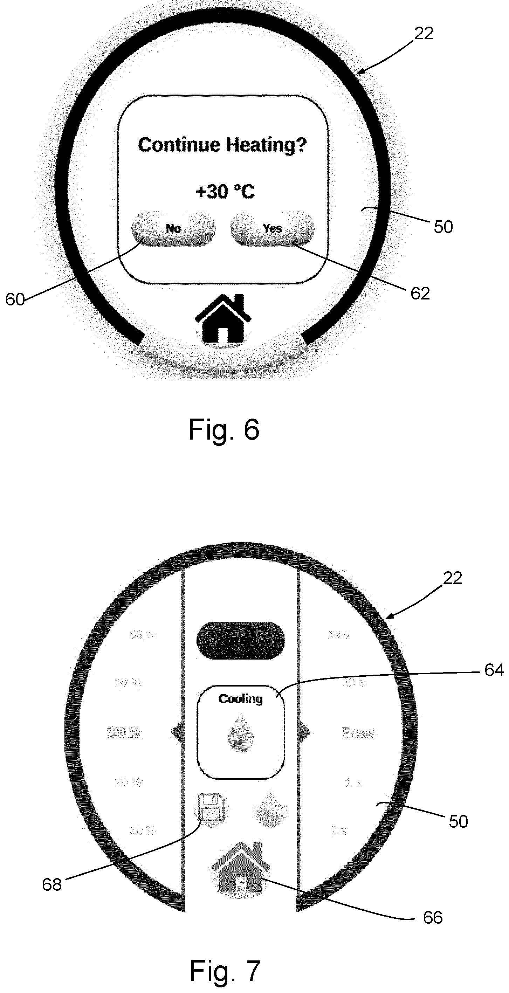

Fig. 6 veranschaulicht die Möglichkeit zur Ja/Nein-Entscheidung für einen Nachheizzyklus über die entsprechenden Tasten 60, 62.

Fig. 7 zeigt schließlich den Touchscreen 50 bei Beendigung des Heizvorgangs, wenn ggf. eine aktive Kühlung (Cooling 64) durch die Kühleinheit 18 erfolgt.

Darüber hinaus hat der Benutzer die Möglichkeit, durch Betätigung der Home-Taste 66 Einstellungen vorzunehmen und mittels der Speichertaste 68 gewisse Parameter abzuspeichern.

## Patentansprüche

1. Betriebsverfahren für ein Schrumpfgerät (10) zum Ein- oder Ausschrumpfen eines in einem Schrumpffutter (12) fixierbaren Werkzeugs (14), wobei das Schrumpffutter (12) in einer vorzugsweise induktiven Heizeinheit (16) positioniert wird und in einem Heizvorgang aufgeheizt wird, wobei bei dem Heizvorgang ein Heizzyklus durch einmalige Betätigung nur eines Betätigungselements (52) einer Gerätebedienschnittstelle (22) aktiviert wird, wobei eine vorgegebene Zieltemperatur durch die Heizeinheit (16) angesteuert wird, **dadurch gekennzeichnet, dass** die Zieltemperatur nach Maßgabe einer Werkzeugaufnahmekontur des Schrumpffutters, einer benötigten Heizleistung in einer Anfangsphase des Heizzyklus und/oder einer Erhitzungsdauer bis zum Erreichen einer Temperaturschwelle automatisch bestimmt wird.

2. Betriebsverfahren nach Anspruch 1, **dadurch gekennzeichnet, dass** die Zieltemperatur nach Maßgabe einer einer Erhitzungsdauer bis zum Erreichen einer Temperaturschwelle von 290°C automatisch bestimmt wird.

3. Betriebsverfahren nach Anspruch 1 oder 2, **dadurch gekennzeichnet, dass** das Erreichen der Zieltemperatur mittels eines Sensors (24) vorzugsweise berührungslos an dem Schrumpffutter (12) erfasst wird.

4. Betriebsverfahren nach einem der Ansprüche 1 bis 3, **dadurch gekennzeichnet, dass** eine Zieltemperatur im Bereich von 290 bis 390°C, bevorzugt im Bereich von 320 bis 380°C vorgegeben oder automatisch gewählt wird.

5. Betriebsverfahren nach einem der Ansprüche 1 bis 4, **dadurch gekennzeichnet, dass** bei Erreichen der Zieltemperatur eine Bedienerbestätigung für einen Nachheizzyklus mit höherer Zieltemperatur abgefragt wird.

6. Betriebsverfahren nach Anspruch 5, **dadurch gekennzeichnet, dass** die Bedienerbestätigung durch eine Ja/Nein-Auswahl an der Gerätebedienschnittstelle (22) abgefragt wird, wobei bei einer Ja-Auswahl der Nachheizzyklus gestartet wird und bei einer Nein-Auswahl der Heizvorgang beendet wird.

7. Betriebsverfahren nach Anspruch 5 oder 6, **dadurch gekennzeichnet, dass** in dem Nachheizzyklus die Zieltemperatur um einen vorgegebenen Betrag erhöht wird.

8. Betriebsverfahren nach einem der Ansprüche 5 bis 7, **dadurch gekennzeichnet, dass** mehrere Nachheizzyklen nach jeweiliger Bedienerbestätigung nacheinander durchlaufen werden.

9. Betriebsverfahren nach einem der Ansprüche 5 bis 8, **dadurch gekennzeichnet, dass** in einem zweiten oder weiteren Nachheizzyklus mindestens ein Heizparameter ausgewählt aus der Gruppe Aufheizgradient, Zieltemperatur, Haltedauer der Zieltemperatur verändert wird.

10. Betriebsverfahren nach einem der Ansprüche 1 bis 9, **dadurch gekennzeichnet, dass** nach einer vorgegebenen Wartezeit nach Erreichen der Zieltemperatur der Heizvorgang selbsttätig beendet wird.

11. Betriebsverfahren nach einem der Ansprüche 1 bis 10, **dadurch gekennzeichnet, dass** das Schrumpffutter (12) nach Beendigung des Heizvorgangs aktiv mittels einer Kühleinheit (18) abgekühlt wird.

12. Betriebsverfahren nach einem der Ansprüche 1 bis 11, **dadurch gekennzeichnet, dass** die Abkühldauer des Schrumpffutters (12) abhängig von der Dauer des Heizvorgangs und/oder der erreichten Zieltemperatur und/oder der eingebrachten Heizleistung angepasst wird.

13. Betriebsverfahren nach einem der Ansprüche 1 bis 12, **dadurch gekennzeichnet, dass** der Heizvorgang bei Erreichen einer vorgegebenen Grenztemperatur des Schrumpffutters (12) abgebrochen wird, wobei die Grenztemperatur im Bereich von 400 bis 600°C vorgegeben wird.

14. Betriebsverfahren nach einem der Ansprüche 1 bis 13, **dadurch gekennzeichnet, dass** das Schrumpffutter (12) durch eine Temperaturregelung auf der Zieltemperatur gehalten wird.

15. Schrumpfgerät (10) zum Ein- oder Ausschrumpfen eines in einem Schrumpffutter (12) fixierbaren Werkzeugs (14), mit einer vorzugsweise induktiven Heizeinheit (16) zur Aufnahme und Aufheizung des Schrumpffutters (12) in einem Heizvorgang, und einer für einen One-Touch-Start eingerichteten Gerätebedienschnittstelle (22), wobei durch den One-Touch-Start unter einmaliger Betätigung nur eines Betätigungselements (52) ein Heizzyklus aktivierbar und eine vorgegebene Zieltemperatur selbsttätig ansteuerbar ist, **dadurch gekennzeichnet, dass** die Zieltemperatur durch ein Steuergerät nach Maßgabe einer Werkzeugaufnahmekontur des Schrumpffutters, einer benötigten Heizleistung in einer Anfangsphase des Heizzyklus und/oder einer Erhitzungsdauer bis zum Erreichen einer Temperaturschwelle automatisch bestimmt wird.

## Claims

1. Operating method for a shrink-fit device (10) for shrinking or expanding a tool (14) that can be fixed in a shrink-fit chuck (12), the shrink-fit chuck (12) being positioned in a preferably inductive heating unit (16) and being heated in a heating process, a heating cycle being activated during the heating process by a single actuation of only one actuating element (52) of a device operating interface (22), a specified target temperature being controlled by the heating unit (16),
**characterized in that** the target temperature is automatically determined according to a tool-receiving contour of the shrink-fit chuck, a required heating power in an initial phase of the heating cycle, and/or a heating duration until a temperature threshold is reached.

2. Operating method according to claim 1, **characterized in that** the target temperature is automatically determined according to a heating duration until a temperature threshold of 290°C is reached.

3. Operating method according to claim 1 or 2, **characterized in that** the reaching of the target temperature is preferably contactlessly detected on the shrink-fit chuck (12) by means of a sensor (24).

4. Operating method according to any of claims 1 to 3, **characterized in that** a target temperature in the range of 290 to 390°C, preferably in the range of 320 to 380°C, is specified or automatically selected.

5. Operating method according to any of claims 1 to 4,
**characterized in that,** when the target temperature is reached, an operator confirmation is requested for a reheating cycle with a higher target temperature.

6. Operating method according to claim 5, **characterized in that** the operator confirmation is requested by a yes/no selection at the device operating interface (22), a yes selection starting the reheating cycle and a no selection ending the heating process.

7. Operating method according to claim 5 or 6, **characterized in that,** in the reheating cycle, the target temperature is increased by a specified amount.

8. Operating method according to any of claims 5 to 7, **characterized in that** several reheating cycles are run consecutively after each operator confirmation.

9. Operating method according to any of claims 5 to 8,
**characterized in that,** in a second or further reheating cycle, at least one heating parameter, selected from the group of heating gradient, target temperature, holding duration of the target temperature, is changed.

10. Operating method according to any of claims 1 to 9,
**characterized in that,** after a specified waiting period after the target temperature is reached, the heating process is autonomously ended.

11. Operating method according to any of claims 1 to 10,
**characterized in that,** after the heating process has ended, the shrink-fit chuck (12) is actively cooled by means of a cooling unit (18).

12. Operating method according to any of claims 1 to 11,
**characterized in that** the cooling duration of the shrink-fit chuck (12) is adjusted depending on the duration of the heating process and/or the target temperature reached and/or the heating power applied.

13. Operating method according to any of claims 1 to 12,
**characterized in that** the heating process is terminated when a specified limit temperature of the shrink-fit chuck (12) is reached, the limit temperature being specified in the range of 400 to 600°C.

14. Operating method according to any of claims 1 to 13,
**characterized in that** the shrink-fit chuck (12) is kept at the target temperature by a temperature control.

15. Shrink-fit device (10) for shrinking or expanding a tool (14) that can be fixed in a shrink-fit chuck (12), comprising a preferably inductive heating unit (16) for receiving and heating the shrink-fit chuck (12) in a heating process, and a device operating interface (22) designed for one-touch start, it being possible for a heating cycle to be activated and for a specified target temperature to be autonomously controlled by means of the one-touch start with a single actuation of only one actuating element (52), **characterized in that** the target temperature is automatically determined by a control unit according to a tool-receiving contour of the shrink-fit chuck, a required heating power in an initial phase of the heating cycle, and/or a heating duration until a temperature threshold is reached.

## Revendications

1. Procédé de fonctionnement pour un appareil de thermorétraction (10) pour la mise en place ou le retrait par thermorétraction d'un outil (14) pouvant être fixé dans un mandrin thermorétractable (12), dans lequel le mandrin thermorétractable (12) est positionné dans une unité de chauffage (16), de préférence à induction, et chauffé au cours d'un processus de chauffage, dans lequel, lors du processus de chauffage, un cycle de chauffage est activé par l'actionnement unique d'un seul élément d'actionnement (52) d'une interface de manipulation d'appareil (22), dans lequel une température cible prédéfinie est commandée par l'unité de chauffage (16), **caractérisé en ce que** la température cible est déterminée automatiquement en fonction d'un contour de logement d'outil du mandrin thermorétractable, d'une puissance de chauffage requise au cours d'une phase initiale du cycle de chauffage et/ou d'une durée de chauffage jusqu'à ce qu'un seuil de température soit atteint.

2. Procédé de fonctionnement selon la revendication 1,
**caractérisé en ce que** la température cible est déterminée automatiquement en fonction d'une durée de chauffage jusqu'à ce qu'un seuil de température de 290 °C soit atteint.

3. Procédé de fonctionnement selon la revendication 1 ou 2,
**caractérisé en ce que** l'atteinte de la température cible est détectée au niveau du mandrin thermorétractable (12) à l'aide d'un capteur (24), de préférence sans contact.

4. Procédé de fonctionnement selon l'une des revendications 1 à 3,
**caractérisé en ce qu'**une température cible comprise dans la plage allant de 290 à 390 °C, de préférence dans la plage allant de 320 à 380 °C, est prédéfinie ou sélectionnée automatiquement.

5. Procédé de fonctionnement selon l'une des revendications 1 à 4,
**caractérisé en ce que,** lorsque la température cible est atteinte, une confirmation de l'utilisateur est demandée pour un cycle de postchauffage avec une température cible plus élevée.

6. Procédé de fonctionnement selon la revendication 5,
**caractérisé en ce que** la confirmation de l'utilisateur est demandée par une sélection « Oui/Non » sur l'interface de manipulation d'appareil (22), dans lequel le cycle de postchauffage est lancé en cas de sélection de « Oui » et le processus de chauffage est arrêté en cas de sélection de « Non ».

7. Procédé de fonctionnement selon la revendication 5 ou 6,
**caractérisé en ce que,** au cours du cycle de postchauffage, la température cible est augmentée d'une valeur prédéfinie.

8. Procédé de fonctionnement selon l'une des revendications 5 à 7,
**caractérisé en ce que** plusieurs cycles de postchauffage sont effectués successivement après une confirmation de l'utilisateur respective.

9. Procédé de fonctionnement selon l'une des revendications 5 à 8,
**caractérisé en ce que,** au cours d'un second cycle de postchauffage ou d'un cycle de postchauffage supplémentaire, au moins un paramètre de chauffage choisi dans le groupe comprenant gradient de chauffage, température cible, durée de maintien de la température cible, est modifié.

10. Procédé de fonctionnement selon l'une des revendications 1 à 9,
**caractérisé en ce que,** après un temps d'attente prédéfini après l'atteinte de la température cible, le processus de chauffage est arrêté automatiquement.

11. Procédé de fonctionnement selon l'une des revendications 1 à 10,
**caractérisé en ce que** le mandrin thermorétractable (12) est refroidi activement à l'aide d'une unité de refroidissement (18) après l'arrêt du processus de chauffage.

12. Procédé de fonctionnement selon l'une des revendications 1 à 11,
**caractérisé en ce que** la durée de refroidissement du mandrin thermorétractable (12) est adaptée en fonction de la durée du processus de chauffage et/ou de la température cible atteinte et/ou de la puissance de chauffage fournie.

13. Procédé de fonctionnement selon l'une des revendications 1 à 12,
**caractérisé en ce que** le processus de chauffage est interrompu lorsqu'une température limite prédéfinie du mandrin thermorétractable (12) a été atteinte, dans lequel la température limite est prédéfinie dans la plage allant de 400 à 600 °C.

14. Procédé de fonctionnement selon l'une des revendications 1 à 13,
**caractérisé en ce que** le mandrin thermorétractable (12) est maintenu à la température cible grâce à un système de régulation de température.

15. Appareil de thermorétraction (10) pour la mise en place ou le retrait par thermorétraction d'un outil (14) pouvant être fixé dans un mandrin thermorétractable (12), comportant une unité de chauffage (16), de préférence à induction, permettant de recevoir et de chauffer le mandrin thermorétractable (12) lors d'un processus de chauffage, et une interface de manipulation d'appareil (22) conçue pour un démarrage monotouche, dans lequel, au moyen du démarrage monotouche, un cycle de chauffage peut être activé et une température cible prédéfinie peut être commandée automatiquement par l'actionnement unique d'un seul élément d'actionnement (52), **caractérisé en ce que** la température cible est déterminée automatiquement par un appareil de commande en fonction d'un contour de logement d'outil du mandrin thermorétractable, d'une puissance de chauffage requise au cours d'une phase initiale du cycle de chauffage et/ou d'une durée de chauffage jusqu'à ce qu'un seuil de température soit atteint.
